# EUROPEAN PATENT APPLICATION

(11) **EP 1 413 609 A1**
(43) Date of publication of application: **28.04.2004**
(21) Application number: 03023709.3
(22) Date of filing: 20.10.2003
(51) Int. Cl.: C09D 11/00

(54) **Pigmented ink set for ink jet printers**

(30) Priority: 25.10.2002 GB 0224737
(71) Applicant: Ilford Imaging UK Limited, Knutsford, Cheshire WA16 7JL (GB)
(72) Inventor: Barker, Craig Edward Charles, Knutsford Cheshire WA16 7ET (GB); Walker, Nicholas Alexander, Congleton Cheshire CW12 4EZ (GB)

(57) **Abstract**

There is provided an aqueous ink set for ink jet printing comprising:
(a) a yellow ink comprising an aqueous carrier medium and a yellow pigment as a yellow colorant;
(b) a magenta ink comprising an aqueous carrier medium and a magenta pigment as a magenta colorant;
(c) a dilute magenta ink comprising an aqueous carrier medium and a magenta pigment as a magenta colorant;
(d) a cyan ink comprising an aqueous carrier medium and a phthalocyanine pigment as a cyan colorant;
(e) a dilute cyan ink comprising an aqueous carrier medium and a phthalocyanine pigment as a cyan colorant;
(f) a black ink comprising an aqueous carrier medium and a carbon black as a black pigment;
(g) a dilute black ink comprising an aqueous carrier medium and a carbon black as a black pigment; and
(h) a more dilute black ink comprising an aqueous carrier medium and a carbon black as a black pigment.

## Description

### Field of the Invention

This invention relates to a pigmented aqueous ink set for ink jet printers, and in particular to an eight colour ink set permitting improved image quality.

### Background of the Invention

The inkjet process is a non-contact printing process in which droplets of a recording fluid, the ink, are formed by forcing the fluid through a tiny nozzle (or a series of nozzles) in response to digital signals and deposited on a recording material to be printed such as paper or transparent film. This method is important because it permits high speed recording with limited noise or other disadvantages. In recent years, ink jet printers have found broad application as output for personal computers in the office and the home in applications such as desktop document production and pictorial imaging. There are several classes of ink jet printers, for example thermal and piezo drop on demand printers and continuous ink jet printers. In a thermal printer, the droplets are ejected on demand from tiny ink reservoirs by heating the ink to form bubbles which expand to expel the ink as the print head scans the recording material. In a piezo drop on demand printer the droplets are expelled by flexure of a piezoelectric element controlled by the computer. In the continuous printing method, a continuous stream of electrostatically charged droplets may be produced; the trajectories of the droplets may be controlled by means of electrically controlled deflection plates to hit the desired spot on the paper, and unused droplets may be collected into a reservoir for recycling.

Ink jet printers for the home or office generally use aqueous inks, and such inks commonly employ dyes as colorants. Typically, for most uses a set of four inks is provided comprising the three subtractive primary colours cyan, magenta, and yellow, together with a black ink (commonly referred to as CMYK). Using this ink set, the number per unit area and diameter of the ink dots formed on the recording medium may be controlled for colour mixing, according to the densities of three primary colour components in the original images to be recorded, thus reproducing the original colour.

As ink jet printers have developed and become more common, there has arisen increased interest in using ink jet prints as a replacement for conventional silver halide photographic images and for other imaging and display applications. However it is difficult to equal the image quality of conventional photographic prints on a standard four colour ink jet printer, and the prints appear unnatural. This is partly because it is difficult or impossible to express the gradation in image density between the lowest and highest density with sufficient accuracy and is particularly obvious if the images contain pale shades or delicate tints, because the individual dots become visible. Further, the images thus appear substantially less sharp.

As a means to overcome this problem, ink sets comprising additional inks have been developed. For instance, United States Patent 4,533,920 discloses an ink-jet recording method using inks having different dye concentrations for recording full colour images with good gradation. In particular, it is known to use a six colour ink set comprising the three subtractive primary colours cyan, magenta, and yellow, together with dilute cyan and magenta inks and a black ink (commonly referred to as CcMmYK). According to this technique, the density gradations of each colour can be better expressed, particularly at lower image density areas. Furthermore, the visibility of the dots in the light areas of the print can be reduced by printing such areas with the dilute inks, thus increasing the number of dots printed for a given density and reducing the visual impact of any given dot, and the total density may be increased by overprinting one ink with another.

More recently, pigmented ink jet inks have been developed to overcome certain deficiencies to the use of dyed inks such as relatively poor light stability and fastness to gases, washing, and weathering. The term pigment describes a colorant which is substantially insoluble in the aqueous ink medium. Suitable pigments for use in such inks are known, and for example four colour pigmented CMYK ink sets are disclosed in European Patent Application 1 038 930 A and United States Patent 5,738,716. It is also known to use pigment ink sets comprising additional dilute inks, and for example an eight ink set comprising CMYK and dilute cyan, magenta, yellow, and black inks is disclosed in European Patent Application 1 148 103 A.

However, there still exists a need for a pigmented ink set to provide improved image quality. We have developed an ink set which provides natural looking images of good resolution and superior light fastness.

### Summary of the Invention

Therefore according to this invention there is provided an eight colour ink set for ink jet printing comprising:
(a) a yellow ink comprising an aqueous carrier medium and a yellow pigment as a yellow colorant;
(b) a magenta ink comprising an aqueous carrier medium and a magenta pigment as a magenta colorant;
(c) a dilute magenta ink comprising an aqueous carrier medium and a magenta pigment as a magenta colorant;
(d) a cyan ink comprising an aqueous carrier medium and a phthalocyanine pigment as a cyan colorant;
(e) a dilute cyan ink comprising an aqueous carrier medium and a phthalocyanine pigment as a cyan colorant;
(f) a black ink comprising an aqueous carrier medium and a carbon black as a black pigment;
(g) a dilute black ink comprising an aqueous carrier medium and a carbon black as a black pigment; and
(h) a more dilute black ink comprising an aqueous carrier medium and a carbon black as a black pigment.

By the term dilute ink is meant a medium ink or a light ink, that is to say an ink wherein the colour strength is lower than that in the full strength ink. In general this may be achieved using a lower concentration of pigment. By a more dilute ink is meant an ink wherein the colour strength is lower than in the dilute ink. Thus the black inks may be described as black, medium black, and light black; or alternatively as black and grey inks.

By an aqueous carrier medium is meant a liquid solvent vehicle which is water or is predominantly water. Deionised water is commonly used. It is common in aqueous ink jet inks to employ a carrier medium which is a mixture comprising water and at least one relatively involatile water miscible organic cosolvent. The organic solvent component(s) generally serve as humectant to prevent drying out of the ink in the nozzles of the printer, but may also serve as cosolvent, viscosity regulating agent, ink penetration additive, wetting agent, levelling agent or drying agent.

The water miscible organic cosolvent may be any organic solvent which has sufficient solubility in water. Representative examples of organic solvents which may be selected include:
(1) alcohols, such as methyl alcohol, ethyl alcohol, n-propyl alcohol, isopropyl alcohol, n-butyl alcohol, sec-butyl alcohol, t-butyl alcohol, iso-butyl alcohol, neopentyl alcohol, 2-ethyl hexyl alcohol, benzyl alcohol, furfuryl alcohol, and tetrahydrofurfuryl alcohol;
(2) ketones or ketoalcohols such as acetone, methyl ethyl ketone, diethyl ketone, methyl isobutyl ketone, methyl pentyl ketone, cyclopentanone, cyclohexanone and diacetone alcohol;
(3) ethers, such as tetrahydrofuran and dioxan;
(4) esters, such as ethyl lactate;
(5) polyhydric alcohols, such as ethylene glycol, diethylene glycol, triethylene glycol, tetraethylene glycol, polyethylene glycol, propylene glycol, dipropylene glycol, tripropylene glycol, butylene glycol, 1,3-propanediol, 1,3-butanediol, 2,3-butanediol, 1,4-butanediol, 1,5-pentanediol, 2,4-pentanediol, 1,2-hexanediol, 1,6-hexanediol, 2,5-hexanediol, 1,4-cyclohexanediol, 1,2-cyclohexanediol, 1,2,4-butanetriol, 1,2,5-pentanetriol, 1,2,6-hexanetriol, 3-methyl-1,5-pentanediol, 2-methyl-2,4-pentanediol 1,1,1-tris-(hydroxymethyl)-ethane, 1,1,1-tris-(hydroxymethyl)-propane, neopentyl glycol, pentaerythritol, and glycerol;
(6) mono-or di-ethers derived from alkylene glycols, such as ethylene glycol monomethyl (or -ethyl, - propyl, or - butyl) ether, diethylene glycol mono-methyl (or -ethyl, - propyl, or - butyl) ether, triethylene glycol mono-methyl (or -ethyl, - propyl, or - butyl) ether, propylene glycol mono-methyl (or -ethyl) ether, dipropylene glycol mono-methyl (or - ethyl) ether, ethylene glycol monophenyl ether, ethylene glycol di-methyl (or -ethyl) ether, diethylene glycol dimethyl (or -ethyl) ether, propylene glycol dimethyl (or -ethyl) ether and dipropylene glycol dimethyl (or -ethyl) ether;
(7) sulphur-containing compounds such as tetramethylene sulphone, dimethyl sulphoxide, bis-(2-hydroxyethyl) sulphone, and thiodiglycol; and
(8) nitrogen containing organic compounds such as pyrrolidone, 1-methyl-2-pyrrolidone, 1-(2-hydroxyethyl)-2-pyrrolidinone, dimethylformamide, dimethylacetamide, urea, tetramethylurea, ethyleneurea, and 1,3-dimethyl-2-imidazolidinone.

Selection of a suitable mixture of water and water miscible organic cosolvent depends on the requirements of the specific printer and application, such as the desired surface tension and viscosity of the inks, the selected pigment, the drying time, and the type of substrate onto which the inks will be printed. A mixture of water and at least one water soluble organic solvent having at least 2 hydroxyl groups is preferred. Therefore preferred organic cosolvents include for example diethylene glycol, triethylene glycol, polyethylene glycol, thiodiglycol, glycerol, 1,2-hexanediol, 1,5-pentanediol, and mixtures comprising these solvents. The aqueous ink compositions may contain up to 50% of the organic cosolvent or mixture of organic cosolvents. Preferably the inks of the inventive set comprise up to 10% of each organic cosolvent, and most preferably between approximately 5% and approximately 10% of each of a mixture of at least two organic cosolvents.

Many suitable pigments for the inks of the invention are listed in the Pigments and Solvent Dyes section of the Colour Index International, published by the Society of Dyers and Colourists in 1997. Yellow pigments useful in the invention include C.I. Pigment Yellow 74, 97, 109, 128, 138, 139, 151, 154, 155, 167, 180, 185, or mixtures thereof. In a preferred embodiment, the yellow pigment is Pigment Yellow 74 or Pigment Yellow 155.

Suitable magenta pigments for the magenta ink and the dilute magenta ink include azo pigments and quinacridone pigments, of which quinacridone pigments such as C.I. Pigment Red 122, 207, and 209 and C.I. Pigment Violet 19 are preferred. Pigment Red 122 is especially preferred for both the magenta and dilute magenta inks.

Suitable phthalocyanine pigments listed in the Colour Index include C.I. Pigment Blue 15, 15:1, 15:2, 15:3, 15:4, 15:6, 16, 75, 76, and 79. Preferably the phthalocyanine pigment in both the cyan and dilute cyan inks is β-copper phthalocyanine, C.I. Pigment Blue 15:3 or 15:4.

Carbon black is listed in the Colour Index as C.I. Pigment Black 7. Examples include gas black, furnace black, lamp black, acetylene black, and channel black.

Optionally, there may be present in the black, medium black, and light black inks additional pigment(s) or dye(s) to provide a more neutral image tone for these inks.

The pigment for preparation of any of the inks of the invention may be used in the form of a dry powder. However pigments are often supplied commercially as a concentrated aqueous pigment dispersion, and this invention is also useful for pigments supplied as such dispersions, which commonly include dispersants and other cosolvents as well as water. Alternatively the pigment may be supplied in the form of a water wet presscake. In presscake form, the pigment is not aggregated to the extent that it is in dry form and thus the pigment does not require as much deaggregation in the process of preparing the inks from dry pigments. It is also possible to use a processed pigment such as self dispersing pigment or a pigment having a surface treated with a resin or the like.

Optionally and preferably each ink may also comprise at least one dispersant for the pigment. The purpose of the dispersant is to promote wetting and deaggregation of the raw pigment, to maintain colloidal particle stability, and to retard flocculation, reagglomeration, and settling of the particles in the ink. Suitable dispersants for pigmented ink jet inks are well known in the art, and include polymeric dispersants as well as some non-polymeric compounds of the surfactant type. Suitable dispersants for this invention include macromolecular polyionic dispersants, for example copolymers of styrene with acrylic, methacrylic, or maleic acids; various types of poly(ethylene oxide) condensates such as alkyl polyethylene oxide ethers and sulphate or phosphate esters thereof; and surfactants such as sarcosinate compounds. The ink may contain up to 400% of the dispersant by weight on the pigment, but preferably between about 10% and about 100% by weight on the pigment, and most preferably approximately 20 to 50% by weight on the pigment, depending on the pigment used and other properties desired of the ink.

A preferred dispersant for the inks of this invention is a copolymer of styrene with acrylic or methacrylic acids, together with optionally additional vinylically unsaturated comonomers such as acrylate esters. Preferably this dispersant is characterised by an acid number of between approximately 150 and approximately 250, a glass transition temperature between approximately 70°C and approximately 100°C, and a molecular weight of between approximately 2000 and approximately 20000, and most preferably the molecular weight is between approximately 5000 and approximately 10000. Many suitable styrene acrylate dispersants are commercially available. Such styrene acrylate copolymer dispersants may be supplied commercially in the form of concentrated solutions in aqueous base, or as solids which are to be dissolved in water in the presence of a base. Suitable bases for dissolving such dispersants include inorganic bases such as sodium or potassium hydroxide, ammonia, or an organic amine base such as ethanolamine, triethanolamine, 2-amino-2-methyl-1-propanol, or 1-(dimethylamino)-2-propanol. It is also possible to use mixtures of such bases to dissolve the styrene acrylate copolymer.

It is to be understood that the preferred pigment concentration of each of the inks depends on the controlling software as well as the printer to be used, the type of substrate onto which the ink will be printed, and the desired visual result. However in general the full strength inks may contain up to approximately 10% of pigment by weight, preferably between approximately 2% and approximately 5%. The dilute coloured inks may contain a pigment concentration between approximately 0·4% and approximately 4% by weight. The medium black ink may have a pigment concentration between approximately 0·5% and approximately 3% by weight, and the light black ink may have a pigment concentration between approximately 0·1% and approximately 2% by weight

The inks of the invention may also comprise other components which are advantageously added to aqueous ink jet inks, such as surfactants, viscosity modifiers, and biocides. In addition, sequestering agents such as EDTA may also be included to eliminate deleterious effects of heavy metal impurities.

The process of preparing inks from pigments commonly involves two steps: (a) a dispersing or milling step to break up the pigment to the primary particle, and (b) a dilution step in which the dispersed pigment concentrate is diluted with a liquid vehicle and other addenda to a working strength ink. In the dispersing step, the pigment is usually dispersed in a liquid carrier medium which is either water or the same carrier medium as that in the finished ink in the presence of one or more dispersants. The dispersing step may be accomplished by many well known methods, for example by milling in a suitable grinding mill such as a horizontal mini mill, a ball mill, a roll mill, an attritor, or an airjet mill. Mechanical energy is supplied to this pigment dispersion, and the collisions between the milling media and the pigment cause the pigment to deaggregate into its primary particles. Alternatively the pigment may be dispersed using a homogeniser or by passing the dispersing mixture through a plurality of nozzles within a liquid jet interaction chamber at a liquid pressure of at least 1000 psi (6·89 MPa) as described in United States Patent Specification 5,026,427 to produce a uniform dispersion of the pigment particles.

It is generally desirable to prepare a concentrated dispersion for each colour by dispersing the pigment in water, and then to dilute this dispersion with additional water together with the organic solvent or solvents and with any other additives to form the ink. This technique permits preparation of a greater quantity of pigmented ink from the equipment. Further, it is also possible to use the same dispersion for the full strength ink and the dilute ink or inks of the same colour, and to adjust the concentration of the inks to provide the desired colour strength and other properties by appropriate dilution. However different dispersion concentrates may be used for the dilute inks if desired, which enables different pigments or dispersants to be used. In any case, the final formulation is selected to provide the appropriate properties of the ink as necessary.

The surface tension of the inks is preferably in the range from approximately 20 dyne/cm to approximately 50 dyne/cm and the viscosity is generally no greater than 20 cP, and preferably in the range from approximately 1 cP to approximately 10 cP.

The average particle size of the pigment is preferably 10 µm or less, particularly preferably 1 µm or less and most preferably from 50 to 300 nm.

In another embodiment of the present invention, there is provided a process of printing using the ink set of the invention. The printing is effected by using the ink set in an ink jet printer, and applying the inks to a printing medium which can be any of the substrates commonly used for ink-jet printing, for example so-called plain paper, coated paper, wet strength paper, fine art paper, canvas, self-adhesive vinyl, scrim vinyl, overhead transparencies, fabrics, and synthetic media such as white polyester and bonded nonwoven polyolefin film-fibril sheets such as polyethylene or polypropylene banner materials.

The ink set of the invention may be used with a variety of ink jet printers such as continuous, piezoelectric drop-on-demand and thermal or bubble jet drop-on-demand, and is particularly adapted for use in piezoelectric and thermal drop on demand printers. The printer may be a desk top printer or a wide format ink jet printer.

The colour ink set of the invention produces pleasing high quality images of good gradation and high maximum density but showing minimum dot visibility in the highlight areas of the print suitable for pictorial imaging. A further advantage is that images printed with the ink set of the present invention exhibit excellent light fastness.

The following examples will serve to illustrate the invention:-

### Example 1.

### Preparation of Pigment Dispersions

Black, magenta, cyan and yellow aqueous pigment dispersions were prepared according to the compositions shown in table 1 where all parts are by weight using a Microfluidiser Model M210C at 205 MPa. The dispersant used for all colours was a commercially available styrene acrylate copolymer having an acid number of 215, a Tg of 95°C, and a molecular weight of approximately 8500 neutralised with potassium hydroxide. This dispersant is available from Johnson Polymer. Each dispersion was then centrifuged to remove oversized particles and the average particle size was measured using a Polymer laboratories LSP particle size analyser. The results are given in table 1.

**Table 1.**

| **Colour** | **CI Pigment Type** | **% Pigment** | **% Dispersant** | **Average** Particle Size |
|---|---|---|---|---|
| Yellow | Yellow 155 | 10 | 2 | 162 nm |
| Magenta | Red 122 | 10 | 2 | 133 nm |
| Cyan | Blue 15:3 | 10 | 2 | 111 nm |
| Black | Black 7 | 10 | 2·5 | 97 nm |

### Preparation of inks

An inventive eight colour ink set comprising black, medium black, light black, cyan, medium cyan, magenta, medium magenta, and yellow inks was then prepared from the dispersions prepared above by dilution according to the formulations shown in table 2.

**Table 2.**

| **Component** | **Amount Parts by Weight** | | | | | | | |
|---|---|---|---|---|---|---|---|---|
| | Black | Medium Black | Light Black | Cyan | Medium Cyan | Magenta | Medium Magenta | Yellow |
| Pigment Dispersion | 35 | 7·5 | 2 | 25 | 4·5 | 35 | 9 | 30 |
| Polyethylene Glycol MW300 | 10 | 10 | 10 | 10 | 10 | 10 | 10 | 10 |
| Diethylene Glycol | 5 | 10 | 10 | 5 | 5 | 10 | 10 | 10 |
| Glycerol | 10 | 0 | 0 | 10 | 10 | 0 | 0 | 0 |
| 10% Dispersant Solution | 10 | 5 | 5 | 6 | 2·4 | 10 | 0 | 10 |
| Surfactant | 0·1 | 0·1 | 0·1 | 0·1 | 0·1 | 0·1 | 0·1 | 0·1 |
| Deionised water to | 100 | 100 | 100 | 100 | 100 | 100 | 100 | 100 |

The surfactant used was sodium dioctyl sulphosuccinate.

### Print Test

All eight inks were loaded into an ENCAD 850i inkjet printer. The inks were printed onto ILFORD XT2SC17 vinyl media and linear density profiles were created for the cyan, magenta, yellow and black channels.

Photographic images and test charts containing colour wedges for cyan, magenta, yellow, black, red, green and blue were printed. The appearance of the charts and images was assessed visually. The colour wedges showed a very smooth non-grainy appearance and tonal reproduction of the images was extremely good.

### Comparison

A comparison six colour ink set was prepared by taking the black, yellow, cyan, medium cyan, magenta and medium magenta inks prepared above. The inks were loaded into an ENCAD 850i inkjet printer, printed onto ILFORD XT2SC17 vinyl media and linear density profiles were created for the cyan, magenta, yellow and black channels.

Photographic images and test charts containing colour wedges for cyan, magenta, yellow, black, red, green and blue were printed as above. The tonal reproduction for the images was not as good as for the inventive eight colour ink set and the black colour wedge had a grainy appearance.

As a further comparison, a four colour ink set was prepared by taking the black, yellow, cyan, and magenta inks prepared above. The inks were loaded into an ENCAD 850i inkjet printer, printed onto ILFORD XT2SC17 vinyl media and linear density profiles were created for the cyan, magenta, yellow and black channels.

Photographic images and test charts containing colour wedges for cyan, magenta, yellow, black, red, green and blue were printed as above. The tonal reproduction for the images was very poor compared with example 1 and the all of the colour wedges had a grainy appearance.

As a further comparison, black and white monochrome images were printed using the three dilutions of black ink from the inventive eight colour set prepared above. They were compared with monochrome images prepared using the comparison six colour and four colour ink sets. Visual assessment showed that the image from the inventive ink set was tonally far superior to the images from either of the comparison sets. These results show the advantage of the inventive eight colour ink set.

## Claims

1. An aqueous ink jet ink set comprising:
(a) a yellow ink comprising an aqueous carrier medium and a yellow pigment as a yellow colorant;
(b) a magenta ink comprising an aqueous carrier medium and a magenta pigment as a magenta colorant;
(c) a dilute magenta ink comprising an aqueous carrier medium and a magenta pigment as a magenta colorant;
(d) a cyan ink comprising an aqueous carrier medium and a phthalocyanine pigment as a cyan colorant;
(e) a dilute cyan ink comprising an aqueous carrier medium and a phthalocyanine pigment as a cyan colorant;
(f) a black ink comprising an aqueous carrier medium and a carbon black as a black pigment;
(g) a dilute black ink comprising an aqueous carrier medium and a carbon black as a black pigment; and
(h) a more dilute black ink comprising an aqueous carrier medium and a carbon black as a black pigment.

2. An aqueous ink jet ink set according to claim 1 wherein the yellow pigment is selected from Pigment Yellow 74, 97, 109, 128, 138, 139, 151, 154, 155, 167, 180, 185, or mixtures thereof.

3. An aqueous ink jet ink set according to claim 1 wherein the magenta pigment of the magenta ink and the dilute magenta ink is selected from Pigment Red 122, 207, and 209 and Pigment Violet 19.

4. An aqueous ink jet ink set according to claim 1 wherein the phthalocyanine pigment of the cyan ink and the dilute cyan ink is selected from Pigment Blue 15, 15:1, 15:2, 15:3, 15:4, 15:6, 16, 75, 76, and 79.

5. An aqueous ink jet ink composition according to any of claims 1 - 4 wherein the aqueous carrier medium in any of the inks comprises a mixture of water and at least one relatively involatile water soluble organic cosolvent.

6. An aqueous ink jet ink set according to any of claims 1 - 5 wherein at least one of the inks additionally comprises at least one dispersant.

7. An aqueous ink jet ink set according to claim 6 wherein the dispersant is a styrene/acrylate copolymer **characterised by** an acid number of between 150 and 250, a glass transition temperature between 70°C and 100°C, and a molecular weight of between 2000 and 20000.

8. An aqueous ink jet ink set according to claim 1 wherein the pigment concentration of at least one of the full strength inks is between 2% and 5% by weight; the pigment concentration of the dilute coloured inks is between 0·4% and 4% by weight; the pigment concentration of the medium black ink is between 0·5% and 3% by weight; and the pigment concentration of the light black ink is between 0·1% and 2% by weight.

9. A process for printing which comprises using the ink jet ink set of any of the preceding claims in an ink jet printer, and applying the inks to a printing medium with the ink jet printer.
